(19) Europäisches Patentamt
European Patent Office
Office européen des brevets

(11) **EP 3 070 342 B1**

(12) **EUROPÄISCHE PATENTSCHRIFT**

(45) Veröffentlichungstag und Bekanntmachung des Hinweises auf die Patenterteilung:
**25.10.2017 Patentblatt 2017/43**

(51) Int Cl.:
*F15B 15/28* *(2006.01)*     *G01D 5/347* *(2006.01)*

(21) Anmeldenummer: **16159795.0**

(22) Anmeldetag: **11.03.2016**

(54) **FLUIDZYLINDER**

FLUID CYLINDER

VÉRIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.03.2015 DE 102015104201**

(43) Veröffentlichungstag der Anmeldung:
**21.09.2016 Patentblatt 2016/38**

(73) Patentinhaber: **Jungheinrich Aktiengesellschaft 22047 Hamburg (DE)**

(72) Erfinder:
• **Leichnitz, Julia**
**22339 Hamburg (DE)**
• **Mänken, Frank**
**24558 Henstedt-Ulzburg (DE)**

(74) Vertreter: **Hauck Patentanwaltspartnerschaft mbB**
**Kaiser-Wilhelm-Straße 79-87**
**20355 Hamburg (DE)**

(56) Entgegenhaltungen:
**EP-A1- 1 461 585     US-A- 4 836 578**

**Beschreibung**

Die vorliegende Erfindung betrifft einen Fluidzylinder mit einer in einem Zylindermantel geführten Kolbenstange, an der eine Markierung mit äquidistant angeordneten Wegmarken vorgesehen ist. Auf die Markierung ist eine optische Sensoreinheit gerichtet. Mit Hilfe der optischen Sensoreinheit kann eine Hublänge und/oder eine Hubgeschwindigkeit des Fluidzylinders erfasst werden.

Aus DE 10 2005 059 251 ist ein optischer Hybrid-Zylinderpositionssensor bekannt. Der Sensor dient als ein Lageüberwachungssystem, das die Lage eines bewegbaren Gliedes gegenüber einer ortsfesten Sensorschaltung erfasst. Die Sensorschaltung ermittelt die aktuelle Position durch eine Bildauswertung, bei der die Bewegung durch den Vergleich von zwei nacheinander aufgenommenen Bildern ermittelt wird.

Aus WO 96/35098 ist eine Vorrichtung zur Positionsmessung für Zylinderantriebe bekannt. Bei pneumatischen oder hydraulischen Zylindern wird die sich bewegende Kolbenstange als Wegmesssystem genutzt, in dem auf die Kolbenstange nur durch Einwirkung von Laserstrahlung ein Strichmuster erzeugt wird. Ein auf optischer Reflexion basierender Sensor erkennt die dunklen Striche und die hellen Zwischenräume und kann dadurch die Position der Kolbenstange festhalten.

Aus DE 102 42 630 A1 ist eine Mess- und Steuervorrichtung für eine Hebebühne bekannt geworden, bei der an einem beweglichen Körper mehrere Wegmarken angebracht sind und ein auf die Wegmarken gerichteter Sensor die Wegmarken detektiert und über eine Auswertevorrichtung die Anzahl der Wegmarken hochgezählt und so ein Abstand bestimmt wird.

Aus DE 10 2010 044 656 A1 ist ein Flurförderzeug mit einem Hydraulikzylinder bekannt geworden, der eine Kolbenstange und einen Zylindermantel aufweist, in dem die Kolbenstange geführt ist. In einem Kopfbereich ist ein optischer Sensor vorgesehen, der eine auf die Kolbenstange gerichtete Lichtquelle und einen Empfänger für das reflektierte Licht aufweist. Der optische Sensor erfasst aus dem zeitlich nacheinander zu dem Empfänger reflektierten Licht eine Bewegung der Kolbenstange relativ zu dem Sensor.

Aus WO 84/01027 ist ein Positionsmessgerät bekannt, bei dem die Position von zwei Gegenständen relativ zueinander gemessen wird. Hierzu wird ein kodierter Streifen auf dem einen Gegenstand befestigt, der eine Pseudozufallsbinärsequenz aufweist. Eine Erfassungseinrichtung ist auf diese Sequenz gerichtet und erfasst diese an mehreren Stellen gleichzeitig, um eine Relativbewegung feststellen zu können.

Aus EP 1 426 737 B1 ist eine Positionsmesseinrichtung für einen Zylinder bekannt geworden, bei dem Wegmarken auf einer Kolbenstange mit unterschiedlichen Abständen aufgebracht sind. Die Position der Wegmarken wird über einen optischen Sensor erfasst.

Aus DE 693 07 135 T2 ist eine Positionsskala mit Strichen bekannt geworden, wobei die Striche eine erste und eine zweite Kante aufweisen, von denen entweder die erste oder die zweite Kante in regelmäßigen Abschnitten angeordnet ist. Die Striche besitzen zwei verschiedene Breiten und mehrere aufeinander folgende Striche bilden somit einen individuellen binären Code zur Anzeige der Lage der Striche auf der Skala.

Aus AT 511 883 ist eine Positionsmessvorrichtung für Fluidzylinder bekannt geworden, bei der ein Bildsensor einen rechteckigen Messausschnitt erfasst und auf einer Kolbenstange ein Codemuster angebracht ist, das erfasst werden kann.

Aus WO 2009/112895 A1 ist eine Positionsmesseinrichtung bekannt geworden, bei der mit einem optischen Photosensor eine Veränderung an der Kolbenstange mit unterschiedlichen Markierungen erfasst wird.

Aus EP 1 461 585 B1 ist ein Zylinder mit einer optischen Erfassungseinrichtung bekannt. Faseroptische Sensorfelder sind gleichmäßig beabstandet mit einer Viertelphasenverschiebung gegenüber einer inkrementellen Markierung angeordnet, so dass Änderungen nicht gleichzeitig auftreten. Aus der Reihenfolge der auftretenden Änderungen werden die Bewegungsrichtung und die Position einer Kolbenstange relativ zu einem Startpunkt bestimmt.

Aus EP 2 222 966 B1 ist ein System zur Bestimmung der Position eines Kolbens entlang seinem Hubweg für einen fluiddynamischen Aktuator bekannt. Auf der Kolbenstange sind Rillen vorgesehen, die optisch zur Positionserfassung detektiert werden können.

Aus US 2013/0076346 A1 ist ein System und ein Verfahren zur Bestimmung einer Relativposition bekannt. Hierzu ist ein Feld von Codewörtern vorgesehen, in denen jeweils die Position ihrer Anbringung codiert ist.

Der Erfindung liegt die Aufgabe zugrunde, einen Fluidzylinder bereitzustellen, der auf einfache und zuverlässige Art und Weise die Position seiner Kolbenstange erfassen kann.

Erfindungsgemäß wird die Aufgabe durch einen Fluidzylinder mit den Merkmalen aus Anspruch 1 gelöst. Vorteilhafte Ausgestaltungen bilden den Gegenstand der Unteransprüche.

Der erfindungsgemäße Fluidzylinder besitzt eine in einem Zylindermantel geführte Kolbenstange, an der eine Markierung mit äquidistant angeordneten Marken vorgesehen ist. Ferner besitzt der Fluidzylinder eine auf die Markierung gerichtete optische Sensoreinheit. Erfindungsgemäß weist die Sensoreinheit zwei oder mehr äquidistant zueinander angeordnete optoelektronische Sensorelemente auf. Die optoelektronische Sensorelemente erzeugen jeweils ein binäres Ausgangssignal entsprechend der Markierung auf der Kolbenstange. Erfindungsgemäß sind die optoelektronischen Sensoren relativ zu den Marken in axialer Richtung derart angeordnet, dass jedes binäre Ausgangssignal eine vorbestimmte Phasenverschiebung zu dem zeitlich nachfolgenden Ausgangssignal besitzt. Die Phasenverschiebung der Ausgangssignale relativ zueinander erlaubt eine gute Ortsauflösung der Sensoreinheit und gestattet es, die Position bzw. die zeitliche Veränderung der Position zuverlässig zu erfassen. Durch die Verwendung von zwei oder mehr als zwei optoelektronischen Sensorelementen kann die Positionserfassung robust erfolgen. Bevorzugt werden drei optoelektronische Sensorelemente verwendet.

Erfindungsgemäß weist die Markierung auch mindestens eine Referenzmarke auf, bei der sämtliche optoelektronischen Sensorelemente gleichzeitig ansprechen. Die Sensoreinheit besitzt eine Fehlererkennungseinheit, die die anliegenden binären Ausgangssignale der optoelektronischen Sensorelemente in einen Gray-Code umwandelt und prüft, ob sich mehr als ein Bit bei einer Änderung der Ausgangssignale verändert hat. Bei dem Gray-Code handelt es sich um einen an sich bekannten Code aus der Informationstechnik, der bei der Verwendung von N optoelektronischen Sensorelementen auch N-Bit umfasst. Der Gray-Code ist so aufgebaut, dass mit zunehmender Zeit und Veränderung der Signale der optoelektronischen Sensorelemente stets nur ein Bit sich ändert. Die Hamming-Distanz des Gray-Codes ist somit gleich 1. Sollte die Situation auftreten, dass sich mehr als ein Bit verändert, so können zwei unterschiedliche Fälle unterschieden werden. Die Fehlererkennnungseinheit kann hieraus auf einen Messfehler an einem der optischen Sensorelemente schließen. In einer bevorzugten Ausgestaltung wird ein als fehlerhaft erkanntes Signal registriert. Wenn jedoch sämtliche optische Sensorelemente ansprechen, dann geht die Fehlererkennungseinheit davon aus, dass eine Referenzmarke und kein fehlerhaftes Signal detektiert wurde.

In einer bevorzugten Ausgestaltung der Erfindung besitzen die Marken jeweils mindestens eine Länge in axialer Richtung der Kolbenstange, die dem Abstand von zwei benachbarten Marken entspricht. In axialer Richtung erstreckt sich die Markierung also mindestens über die gleiche Länge wie der Abstand zwischen zwei benachbarten Marken.

In einer weiter bevorzugten Ausgestaltung erzeugt die Elektronik der Sensorelemente jeweils ein Ausgangssignal mit einem Tastgrad von 0,5. Der Tastgrad von 0,5 bedeutet, dass in dem digitalen Ausgangssignal der Zustand 1 genauso lange wie der Zustand Null anliegt. Durch das Einstellen des optoelektronischen Sensorelements mit seinem Schwellwert bei der Hell-Dunkel-Erkennung kann zusammen mit der geeigneten Ausdehnung in axialer Richtung der Marken der Tastgrad von 0,5 erreicht werden.

In einer bevorzugten Ausgestaltung ist die vorbestimmte Phasenverschiebung zwischen zwei zeitlich aufeinander folgenden Ausgangssignalen ein ganzzahliger Bruchteil einer vollen Periode. Dies bedeutet, dass das digitale Ausgangssignal selbst mit den Ausgangssignalen der anderen optoelektronischen Sensorelemente wieder periodisch ist.

In einer bevorzugten Ausgestaltung ist der ganzzahlige Bruchteil der vollen Periode gleich der Anzahl der optoelektronischen Sensorelemente. Dies bedeutet, dass bei der Verwendung von drei optoelektronischen Sensorelementen nach drei vollständigen Perioden eines Signals, sich die Signalfolge wiederholt.

In einer bevorzugten Ausgestaltung genügt der Abstand (a) zwischen der Messachse der Sensorelemente und der Abstand (t) zwischen den Marken der folgenden Gleichung:

$$a = \frac{2nt}{N},$$

wobei (N) die Anzahl der Sensorelemente und (n) eine natürliche Zahl ist. Der Abstand (a) zwischen den optoelektronischen Sensorelementen ist beispielsweise als der minimale Abstand der optoelektronischen Sensorelemente vorgegeben, ohne dass diese sich wechselseitig beeinflussen. Aus diesem Abstand (t) zwischen den Marken ergibt sich dann bei gewählter Zahl (n) und der Anzahl (N) der Sensorelemente der Abstand (a) der Sensorelemente. Der Abstand (a) zwischen den Sensorelementen wird beispielsweise als Abstand zwischen deren Messachsen definiert.

In einer bevorzugten Weiterentwicklung besitzen die Markierungen eine vorbestimmte Ausdehnung in Umfangsrichtung und die optoelektronischen Sensorelemente sind in Umfangsrichtung versetzt zueinander angeordnet. Zudem kann der radiale Abstand der optoelektronischen Sensorelemente zur Markierung und der Zylinderstangenoberfläche variieren. Der für die Positionserkennung relevante axiale Abstand zwischen den optoelektronischen Sensorelementen bleibt dabei unverändert. Der zusätzliche Abstand in Umfangsrichtung und/oder in radialer Richtung trägt nicht zu der Codierung bei, vergrößert aber den Abstand zwischen den Messbereichen der Kontrastlichttaster.

Die Erfindung wird nachfolgend an einem Ausführungsbeispiel näher erläutert. Es zeigen:

Fig. 1        eine schematische Ansicht der Kolbenstange mit ihrer Markierung und der darauf gerichteten optischen Sensoreinheit,

Fign. 2a, b   die relative Positionierung zwischen Markierung und Sensoreinheit in einer Ansicht von der Seite und in einer Ansicht von oben,

Fig. 3        eine schematische Ansicht zu den axialen Abständen zwischen Markierung und Sensoreinheit,

Fig. 4        die zeitliche Abfolge der Signalfolge,

Fig. 5        eine Darstellung der Gray-Codierung und

Fig. 6 einen Schnitt durch den Zylindermantel in seinem Kopfabschnitt.

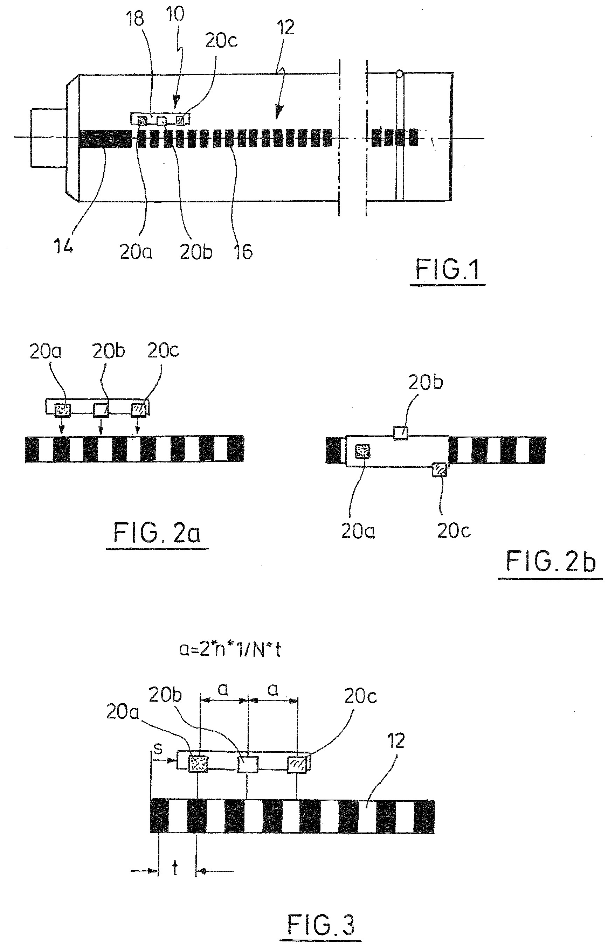

Fig. 1 zeigt in einer schematischen Ansicht eine Kolbenstange 10 mit einer aufgebrachten Markierung 12, die durch Anlassverfärbung per Laser in die Chromschicht eingebracht ist. Die Markierung 12 besitzt mindestens eine Referenzmarke 14, die sich durch eine lange durchgehende Marke auszeichnet. Die Referenzmarke besitzt eine ausreichende Länge, um von allen optoelektronischen Sensorelementen gleichzeitig detektiert zu werden. Alternativ ist es auch möglich, dass bei der Referenzmarke in einem ersten Teil zwei Sensorelemente ansprechen und in einem vom ersten Teil getrennten zweiten Teil das dritte Sensorelement anspricht. Um eine Marke als Referenzmarke zu qualifizieren, müssen alle Sensorelemente ansprechen, unabhängig davon, ob die Markierung am Stück ausgebildet ist oder nicht. Je nach Ausgestaltung können auch mehrere Referenzmarken auf die Kolbenstange aufgebracht werden. Die sich in axialer Richtung an die Referenzmarke 14 anschließenden Marke 16 bestehen aus äquidistant zueinander angeordneten Marken, die schwarz dargestellt sind. Eine Sensoreinheit 18 mit drei optoelektronischen Sensorelementen 20a, 20b, 20c ist schematisch dargestellt.

Die optoelektronischen Sensorelemente 20a, 20b, 20c sind als Leuchtdioden mit einem entsprechenden Empfänger ausgebildet. Als Empfänger kann eine auf die Leuchtdiode abgestimmte Fotodiode oder ein Fototransistor eingesetzt werden. Sie empfangen ein von der Kolbenstange reflektiertes Signal, wobei die dunkle Farbe einer Markierung das Signal entsprechend proportional abschwächt. Über Schwellwertvergleiche wird das anliegende Signal digitalisiert, so dass eine Digitalisierung die Signale einen Tastgrad 0,5 von aufweisen. Dabei wird bevorzugt bei einer dunklen und/oder schwarzen Marke digital eine 1 dargestellt.

Wie in Fig. 2a zu erkennen, liegen die optoelektronischen Sensorelemente20a, 20b, 20c in axialer Richtung hintereinander. Der Blick von oben in Fig. 2b zeigt, dass die Kontrastlichttaster 20a, 20b, 20c jedoch in Umfangsrichtung zueinander verteilt liegen können. Durch die radiale Verteilung wird der geometrische Abstand der Kontrastlichttaster zueinander vergrößert und eine wechselseitige Beeinflussung zwischen den Kontrastlichttastern vermieden.

Figuren 3 bis 5 erläutern die Signalverarbeitung und die Fehlererkennung für das Beispiel von drei optoelektronischen Sensorelementen. Bei der Erläuterung wird gelegentlich darauf verwiesen, wie die Sensoreinheit und die Verarbeitung der Signale zu erfolgen hat, wenn (N) optoelektronische Sensorelemente vorgesehen sind. Bei der Bestimmung der idealen Zahl von optoelektronischen Sensorelementen ist zu berücksichtigen, dass diese gewisse Anforderungen an die Ausdehnung der Sensoreinheit in axialer Richtung stellen, so dass mit einer größer werdenden Anzahl von optoelektronischen Sensorelementen die Sensoreinheit länger baut. Dabei hängt der Zuwachs an axialer Länge der Sensoreinheit davon ab, wie die optoelektronischen Sensorelemente in Umfangsrichtung um die Kolbenstange verteilt und wie die Sensorelemente aufgebaut sind.

Fig. 1 zeigt eine Sensoreinheit 18, bei der die drei optoelektronischen Sensorelemente 20a, 20b, 20c jeweils von Messachse zu Messachse den Abstand (a) besitzen. Da die optoelektronischen Sensorelemente stets äquidistant zueinander angeordnet sind, kann die Größe (a) immer den Abstand zwischen diesen bezeichnen.

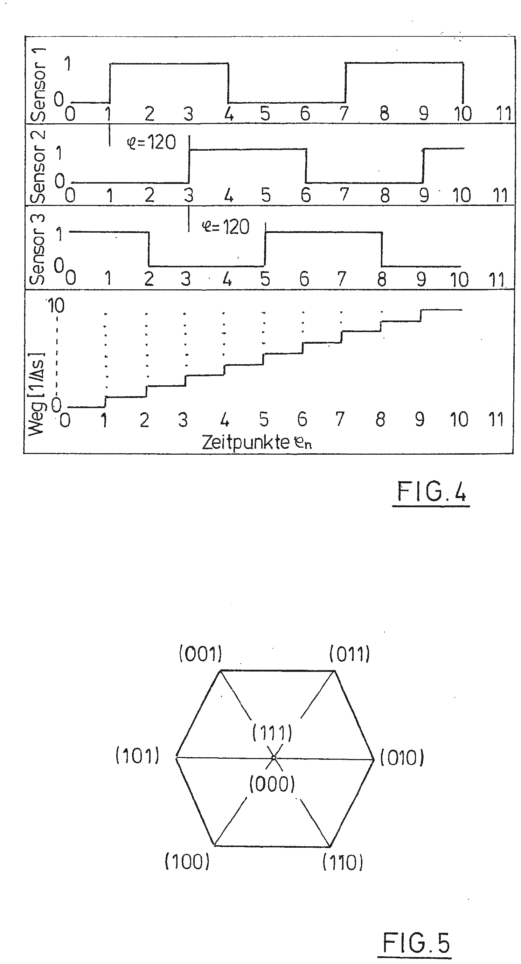

Fig. 4 zeigt den zeitlichen Verlauf der Digitalsignale. Hierbei zeigt die obere Reihe beispielsweise das Digitalsignal des optoelektronischen Sensorelements 20a, die mittlere Reihe das Signal des optoelektronischen Sensorelements 20b und die untere Reihe das Signal des optoelektronischen Sensorelements 20c. Deutlich zu erkennen ist, dass zwischen den Signalen der optoelektronischen Sensorelemente 20a und 20b einen Phasenwinkel von 120° = 360°/3 herrscht.

Das untere Diagramm in Fig. 4 zeigt den aufgrund der Signale der optoelektronischen Sensorelemente erfassten Weg, den die Markierung relativ zu der Sensoreinheit zurückgelegt hat.

Fig. 5 zeigt eine von der Sensoreinheit 18 vorgenommene Gray-Codierung. Hierbei werden die Signale der optoelektronischen Sensorelemente 20a, 20b, 20c jeweils in einen Triple zusammengefasst. Da sich bei dem Messvorgang die Markierung an der Sensoreinheit vorbei bewegt und die dabei entstehenden Ausgangssignale eine Phasenverschiebung zueinander besitzen, tritt auf natürliche Weise die Situation auf, dass sich bei einer Zustandsänderung stets nur ein Bit ändern kann. Dies bedeutet, dass die Zustandsänderung der Gray-Codierung stets entlang der Kanten des Sechsecks erfolgt. Befinden sich drei Sensorelemente über einer Referenzmarke, also entweder über einer einheitlichen Referenzmarke für drei Sensorelemente oder über einer zweiteiligen Referenzmarke, ist das Triple [111] und die Marke wird eindeutig als Referenzmarke erkannt. Das Triple [000] kann nicht auftreten. Tritt eine Änderung um mehr als 1 Bit auf, so ist das Signal fehlerhaft. Fehlerhafte Signale werden registriert und eine entsprechende Statusmitteilung erzeugt. Bevorzugt wird ein Fehlerausgegeben oder die Messung wiederholt.

Wichtig für das Verständnis ist, dass die Referenzmarke auch durch Änderung nur eines Bits erreicht werden kann, also beispielsweise [011] → [111], [101] -> [111] und [110] -> [111]. Daher wird die Referenzmarke nicht über die Änderung der Bit bestimmt, sondern ist durch ihren Wert [111] festgelegt.

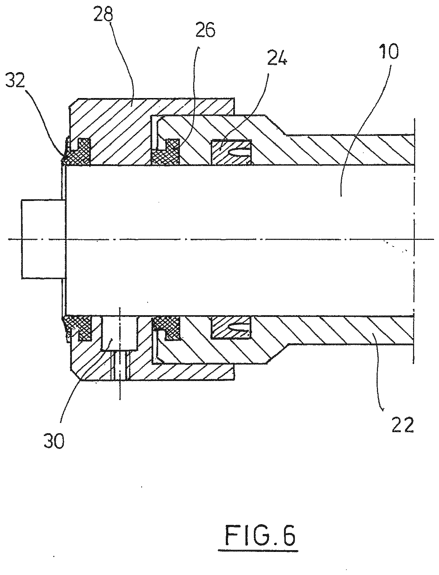

Fig. 6 zeigt einen Schnitt durch einen Zylinderkopf 22, in dem eine Kolbenstange 10 geführt ist. Der Zylinderkopf 22 besitzt eine Dichtung 24 in Form eines Nutringes und einen Abstreifer 26. Auf das Ende des Zylinderkopfes 22 ist eine Kappe 28 aufgesetzt, die einen Hohlraum 30 für die Sensoreinheit besitzt, die von außen montiert werden kann. Die Kappe 28 besitzt an ihrem vom Zylinderkopf fortweisenden Ende einen weiteren Abstreifer 32. Die Kappe ist so konstruiert, dass eine Übereinander-Anordnung von Markierung 12 und Sensoreinheit 18 eingestellt werden und anschließend die Kappe verdrehsicher an dem Zylinderkopf befestigt werden kann.

Bezugszeichenliste

| 10 | Kolbenstange |
| 12 | Markierung |
| 14 | Referenzmarke |
| 16 | Marke |
| 18 | Sensoreinheit |
| 20a-c | optoelektronische Sensorelemente |
| 22 | Zylinderkopf |
| 24 | Dichtung |
| 26 | Abstreifer |
| 28 | Kappe |
| 30 | Hohlraum |
| 32 | Abstreifer |

**Patentansprüche**

1. Fluidzylinder mit einer in einem Zylindermantel geführten Kolbenstange (10), an der eine Markierung (12) mit äquidistant angeordneten Marken vorgesehen ist und mit einer auf die Markierung gerichteten, optischen Sensoreinheit (18),
die mehr als zwei äquidistant angeordnete optoelektronische Sensorelemente (20a, 20b, 20c) aufweist, mit denen jeweils ein binäres Ausgangssignal erzeugt werden kann, wobei der axiale Abstand zwischen den optoelektronischen Sensorelementen (20a, 20b, 20c) und den Marken derart bemessen ist, dass jedes binäre Ausgangssignal eine vorbestimmte Phasenverschiebung zu dem zeitlich nachfolgenden Ausgangssignal besitzt und die Markierung mindestens eine Referenzmarke aufweist, bei der für sämtliche optoelektronische Sensorelemente ein Ausgangssignal vorliegt,
**dadurch gekennzeichnet, dass**
die Sensoreinheit (18) eine Fehlererkennung besitzt, die die anliegenden binären Ausgangssignale der optoelektronischen Sensorelemente (20a, 20b, 20c) in einen Gray-Code umwandelt und bei einer Änderung der Ausgangssignale um mehr als ein Bit ein fehlerhaftes Signal erkennt und ebenfalls bei Ansprechen sämtlicher Sensorelemente die mindestens eine Referenzmarke erkennt.

2. Fluidzylinder nach Anspruch 1, **dadurch gekennzeichnet, dass** die Marken mindestens eine Länge in axialer Richtung aufweisen, die dem Abstand von zwei benachbarten Marken entspricht.

3. Fluidzylinder nach Anspruch 1 oder 2, **dadurch gekennzeichnet, dass** die optoelektronischen Sensorelemente (20a, 20b, 20c) jeweils ein Ausgangssignal mit einem Tastgrad von 0,5 erzeugen.

4. Fluidzylinder nach Anspruch 1 bis 3, **dadurch gekennzeichnet, dass** die vorbestimmte Phasenverschiebung zwischen zwei zeitlich aufeinander nachfolgenden Ausgangssignalen einem ganzzahligen Bruchteil einer vollen Periode entspricht.

5. Fluidzylinder nach Anspruch 4, **dadurch gekennzeichnet, dass** der ganzzahlige Bruchteil der vollen Periode der Anzahl der optoelektronischen Sensorelemente (20a, 20b, 20c) entspricht.

6. Fluidzylinder nach einem der Ansprüche 1 bis 5, **dadurch gekennzeichnet, dass** der Abstand zwischen den optoelektronischen Sensorelementen (a) und der Abstand zwischen den Markierungen (t) folgender Gleichung genügen

$$a = \frac{2nt}{N},$$

wobei (N) die Anzahl der optoelektronischen Sensorelemente (20a, 20b, 20c) und (n) eine natürliche Zahl ist.

7. Fluidzylinder nach Anspruch 1, **dadurch gekennzeichnet, dass** ein als fehlerhaft erkanntes Signal registriert wird.

8. Fluidzylinder nach Anspruch 1 bis 7, **dadurch gekennzeichnet, dass** die Marken eine vorbestimmte Ausdehnung in Umfangsrichtung besitzen und die optoelektronischen Sensorelemente (20a, 20b, 20c) in Umfangsrichtung versetzt zueinander sind.

9. Fluidzylinder nach einem der Ansprüche 1 bis 8, **dadurch gekennzeichnet, dass** eine Kappe (28) für einen Zylinderkopf (22) vorgesehen ist, wobei die Kolbenstange durch den Zylinderkopf (22) und die Kappe (28) geführt und in der Kappe (28) ein Hohlraum für die Sensoreinheit (18) vorgesehen ist.

**Claims**

1. A fluid cylinder with a piston rod (10) that is guided in a cylinder casing and on which a marking (12) is provided with equidistantly arranged marks, and with an optical sensor unit (18) directed toward the marking,
which has more than two equidistantly arranged optoelectronic sensor elements (20a, 20b, 20c) by means of which a binary output signal can be generated in each case, wherein the axial spacing between the optoelectronic sensor elements (20a, 20b, 20c) and the marks is dimensioned such that each binary output signal possesses a predetermined phase shift relative to the chronologically following output signal, and the marking has at least one reference mark for which an output signal exists in all of the optoelectronic sensor elements, **characterized in that** the sensor unit (18) possesses an error detection which converts the incoming binary output signals from the optoelectronic sensor elements (20a, 20b, 20c) into a Gray code and, if there is a change in the output signals by more than one bit, recognizes a faulty signal, and if all the sensor elements respond, also recognizes the at least one reference mark.

2. The fluid cylinder according to claim 1, **characterized in that** the marks possess at least a length in an axial direction which corresponds to the spacing of two neighboring marks.

3. The fluid cylinder according to claim 1 or 2, **characterized in that** the optoelectronic sensor elements (20a, 20b, 20c) each generate an output signal with a duty cycle of 0.5.

4. The fluid cylinder according to claims 1 to 3, **characterized in that** the predetermined phase shift between two chronologically sequential output signals corresponds to an integral fraction of a full period.

5. The fluid cylinder according to claim 4, **characterized in that** the integral fraction of the full period corresponds to the number of optoelectronic sensor elements (20a, 20b, 20c).

6. The fluid cylinder according to one of claims 1 to 5, **characterized in that** the spacing between the optoelectronic sensor elements (a) and the spacing between the marks (t) satisfies the following equation:

$$a = \frac{2nt}{N},$$

where (N) is the number of optoelectronic sensor elements (20a, 20b, 20c), and (n) is a natural number.

7. The fluid cylinder according to claim 1, **characterized in that** a signal which is recognized as being faulty is recorded.

8. The fluid cylinder according to claims 1 to 7, **characterized in that** the marks possess a predetermined extension in the peripheral direction, and the optoelectronic sensor elements (20a, 20b, 20c) are arranged offset from each other in the peripheral direction.

9. The fluid cylinder according to one of claims 1 to 8, **characterized in that** a cap (28) is provided for a cylinder head (22), wherein the piston rod is guided through the cylinder head (22) and the cap (28), and a cavity is provided in the cap (28) for the sensor unit (18).

## Revendications

1. Vérin à fluide avec une tige de vérin (10) guidée dans une enveloppe de cylindre, sur laquelle est prévu un marquage (12) avec des marques disposées de manière équidistante, et avec une unité de détection optique (18) dirigée vers le marquage et qui comporte plus que deux éléments de détection optoélectroniques (20a, 20b, 20c) disposées de manière équidistante, par lesquels un signal de sortie binaire peut être généré à chaque fois, la distance axiale entre les éléments de détection optoélectroniques (20a, 20b, 20c) et les marques étant dimensionnée de telle façon que chaque signal de sortie binaire a un décalage de phase prédéterminé par rapport au signal de sortie consécutif dans le temps, et le marquage présente au moins une marque de référence dans laquelle un signal de sortie existe pour tous les éléments de détection optoélectroniques, **caractérisé en ce que** l'unité de détection (18) possède un indicateur d'erreur qui transforme les signaux de sortie binaire des éléments de détection optoélectroniques (20a, 20b, 20c) présents à un code de Gray et discerne un signal erroné chez un changement des signaux de sortie pour plus qu'un bit, et discerne également l'au moins une marque de référence quand tous les éléments de détection répondent.

2. Vérin à fluide selon la revendication 1, **caractérisé en ce que** les marques ont au moins une longueur dans la direction axiale qui correspond à la distance de deux marques avoisinantes.

3. Vérin à fluide selon la revendication 1 ou 2, **caractérisé en ce que** les éléments de détection optoélectroniques (20a, 20b, 20c) génèrent chacun un signal de sortie avec un rapport cyclique de 0,5.

4. Vérin à fluide selon les revendications 1 à 3, **caractérisé en ce que** le décalage de phase prédéterminé entre deux signaux de sortie consécutifs dans le temps correspond à une fraction entière d'un cycle complet.

5. Vérin à fluide selon la revendication 4, **caractérisé en ce que** la fraction entière du cycle complet correspond au nombre des éléments de détection optoélectroniques (20a, 20b, 20c).

6. Vérin à fluide selon l'une quelconque des revendications 1 à 5, **caractérisé en ce que** la distance entre les éléments de détection optoélectroniques (a) et la distance entre les marquages (t) assument l'équation suivante

$$a = \frac{2nt}{N},$$

dans laquelle (N) est le nombre des éléments de détection optoélectroniques (20a, 20b, 20c) et (n) est un nombre naturel.

7. Vérin à fluide selon la revendication 1, **caractérisé en ce qu'**un signal discerné comme erroné est enregistré.

8. Vérin à fluide selon les revendications 1 à 7, **caractérisé en ce que** les marques ont une taille prédéterminée dans la direction périphérique et les éléments de détection optoélectroniques (20a, 20b, 20c) sont décalés l'un par rapport à l'autre dans la direction périphérique.

9. Vérin à fluide selon les revendications 1 à 8, **caractérisé en ce qu'**un bouchon (28) est prévu pour une tête cylindrique (22), la tige de vérin étant guidée à travers la tête cylindrique (22) et le bouchon (28), et qu'une cavité pour l'unité de détection (18) est prévue dans le bouchon (28).

FIG.1

FIG.2a

FIG.2b

$$a = 2 \cdot n \cdot 1/N \cdot t$$

FIG.3

FIG.4

FIG.5

FIG.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005059251
- WO 9635098 A
- DE 10242630 A1
- DE 102010044656 A1
- WO 8401027 A
- EP 1426737 B1
- DE 69307135 T2
- AT 511883
- WO 2009112895 A1
- EP 1461585 B1
- EP 2222966 B1
- US 20130076346 A1